# FASCICULE DE BREVET EUROPEEN

(11) **EP 2 415 001 B1**
(45) Date de publication et mention de la délivrance du brevet: **03.09.2014**
(21) Numéro de dépôt: 10717684.4
(22) Date de dépôt: 30.03.2010
(51) Int. Cl.: G06K 19/077, B32B 37/00

(54) **INSERT FORMANT ANTENNE ET CARTE À PUCE LE COMPORTANT**
EINLAGE, DIE EINE ANTENNE BILDET, UND SMART CARD DAMIT
INSERT FORMING AN ANTENNA AND SMART CARD COMPRISING IT.

(30) Priorité: 01.04.2009 FR 0952099
(43) Date de publication de la demande: 08.02.2012
(73) Titulaire: Imprimerie Nationale, 75016 Paris (FR)
(72) Inventeur: MICHAU, Pascal, Daniel, F-59500 Douai (FR); ALLOYEZ, Gautier, Etienne, Jean, F-59500 Douai (FR)
(74) Mandataire: Blot, Philippe Robert Emile
(86) Numéro de dépôt international: PCT/FR2010/050592
(87) Numéro de publication internationale: WO 2010/112761

(56) Documents cités:
- WO-A1-2004/025553
- WO-A2-03/102713
- FR-A1- 2 917 871

## Description

La présente invention concerne un insert formant antenne pour une carte à puce, notamment pour un accès avec et sans contact, du type comportant :
- une couche centrale formant antenne comportant un substrat et au moins un conducteur s'étendant suivant au moins une face du substrat ;
- au moins une couche de couverture recouvrant d'au moins un côté la couche centrale et propre à compenser les irrégularités de la surface de la couche centrale.

Les cartes à puce sont couramment utilisées pour le contrôle d'accès, la monétique, ou encore pour former un document officiel d'identité, tel qu'une carte nationale d'identité.

Les cartes à puce dites « sans contact » comportent une antenne permettant d'établir, par une liaison hertzienne, une communication entre la carte et un lecteur adapté, sans qu'un contact électrique ne soit établi entre le lecteur et la puce de la carte.

L'antenne intégrée dans la carte est formée par exemple par un conducteur cheminant à la surface d'un substrat de support isolant. L'antenne est noyée dans l'épaisseur de la carte, laquelle est formée d'une succession de couches, généralement de polymère, assemblées les unes aux autres.

Pour la fabrication des cartes, il est connu de former d'abord un insert formant antenne comportant une couche centrale intégrant le conducteur formant l'antenne et deux couches de couverture recouvrant de part et d'autre la couche centrale et propre chacune à compenser les irrégularités d'épaisseur de la couche centrale résultant de la présence de l'antenne.

Un tel insert formant antenne est ensuite placé au coeur d'une carte à puce proprement dite en étant enserré entre deux couches de structure, ou plus, placées de part et d'autre. La puce est rapportée dans l'épaisseur de la carte. La liaison entre la puce et l'antenne est réalisée par une connexion filaire, ou bien par une liaison hertzienne. Dans ce dernier cas, l'antenne comporte alors un tronçon d'antenne propre à communiquer au travers de l'épaisseur de la carte avec une antenne correspondante connectée électriquement à la puce.

La présence des couches de couverture s'explique par la nécessité d'obtenir un insert formant antenne avec un bon état de surface, afin de permettre d'obtenir au final une carte à puce d'épaisseur sensiblement constante et avec un bon état de planéité.

Dans la pratique, on constate un résultat imparfait dans la planéité des inserts formant antenne malgré la présence des deux couches de couverture disposées de part et d'autre de la couche centrale. Tel est le cas en particulier lorsque la couche centrale comporte un ensemble de trous traversants, permettant aux deux couches de couverture d'adhérer l'une à l'autre au travers de la couche centrale.

Ces irrégularités de surface sont parfois utilisées en tant qu'éléments distinctifs des cartes permettant de les distinguer d'éventuelles contrefaçons. Toutefois, ceux-ci s'avèrent nuire à l'aspect visuel de la carte, notamment lorsque les couches de structure de la carte sont transparentes.

L'invention a pour but de proposer un insert formant antenne pouvant être utilisé dans une carte à puce aux caractéristiques géométriques améliorées, par exemple de planéité améliorée, et une carte à puce munie d'un tel insert, dont l'aspect visuel est amélioré, notamment lorsque les faces externes de la carte à puce sont transparentes et dont les caractéristiques permettent de satisfaire aux exigences des normes concernant l'épaisseur de la carte.

A cet effet, l'invention a pour objet un insert formant antenne pour une carte à puce du type précité, caractérisé en ce que la ou chaque couche de couverture comporte une feuille proximale située à proximité de la couche centrale et une feuille distale située à l'écart de la couche centrale, les deux feuilles étant superposées et laminées et la feuille proximale a, lors de la phase de lamination, une fluidité plus faible que celle de la feuille distale.

Suivant des modes particuliers de réalisation, l'insert formant antenne comporte l'une ou plusieurs des caractéristiques suivantes :
- la couche centrale, la feuille proximale et la feuille distale sont liées entre elles par lamination simultanée ;
- la couche centrale est dépourvue de micro-circuit électronique et ne comporte qu'un ou plusieurs conducteurs formant antenne ;
- le substrat est traversé de part en part de trous débouchant au travers lesquels les feuilles proximales sont reliées ;
- le ou chaque conducteur forme un motif identifiable ;
- la feuille proximale et la feuille distale sont en polycarbonate ;
- la feuille proximale a une fluidité plus faible que celle de la feuille distale à une température comprise entre 160°C et 200°C et sous une contrainte comprise entre 10N/cm² et 100N/cm² ;
- la feuille proximale a une fluidité plus faible que celle de la feuille distale à une température comprise entre 175°C et 185°C et sous une contrainte comprise entre 85N/cm² et 95N/cm².

L'invention a également pour objet une carte à puce caractérisée en ce qu'elle comporte, dans sa partie médiane, un insert formant antenne selon l'une quelconque des revendications précédentes, et, de part et d'autre, deux couches de structure, au moins l'une des couches comportant une puce.

Suivant des modes de réalisation particuliers, la carte à puce comporte l'une ou plusieurs des caractéristiques suivantes :
- les deux couches de structure sont identiques et de même épaisseur ;
- la carte à puce comporte une entretoise au coté de l'insert formant antenne, l'insert formant antenne et l'entretoise étant enserrés entre les deux couches de structure ;
- la ou chaque couche de structure comporte une couche thermo-inscriptible par laser.

L'invention a également pour objet un procédé de fabrication d'un insert formant antenne tel que décrit ci-dessus, caractérisé en ce qu'il comporte les étapes suivantes :
- former une couche centrale formant antenne à partir d'un substrat et d'au moins un conducteur s'étendant suivant au moins une face du substrat ;
- appliquer une feuille proximale et une feuille distale superposées mais dissociées, au moins d'un côté de la couche centrale, la feuille proximale étant située à proximité de la couche centrale et la feuille distale étant située à distance de la couche centrale, la feuille proximale ayant, lors de la phase de lamination ultérieure, une fluidité plus faible que celle de la couche distale,
- laminer ensemble la couche centrale, la ou chaque feuille proximale et la ou chaque feuille distale.

L'invention sera mieux comprise à la lecture de la description qui va suivre, donnée uniquement à titre d'exemple et faite en se référant aux dessins sur lesquels :
- la figure 1 est une vue en perspective éclatée d'une carte à puce selon l'invention ;
- la figure 2 est une vue en perspective éclatée de détails de l'insert formant antenne de la carte à puce de la figure 1 ; et
- la figure 3 est une vue en section de la carte à puce des figures 1 et 2.

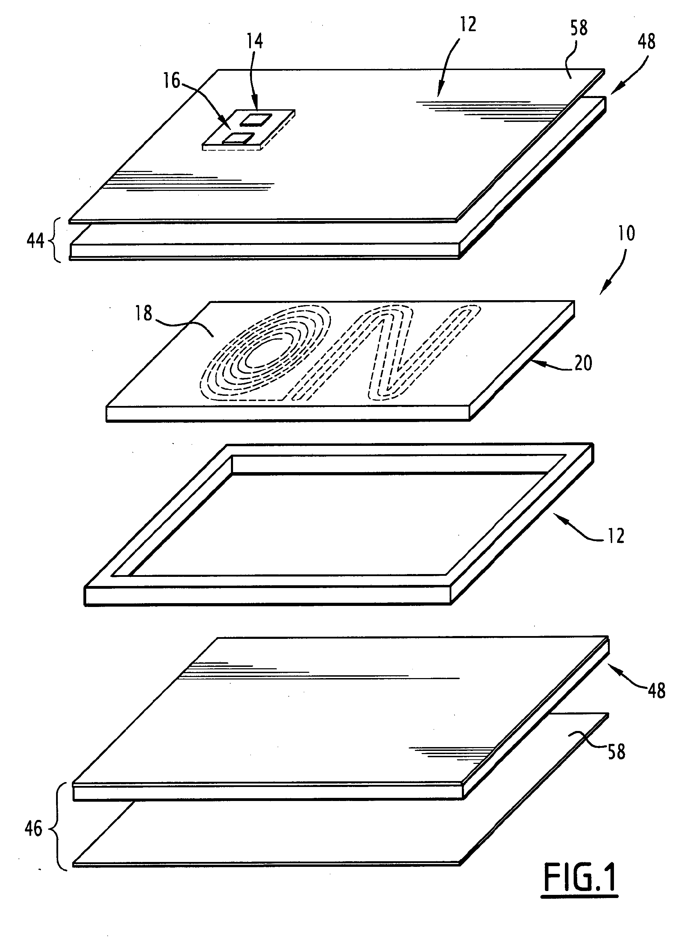

La carte 10 illustrée en vue éclatée sur la figure 1 est une carte à puce dite hybride servant, par exemple, de carte nationale d'identité et permettant l'identification du porteur à partir des informations contenues dans la carte, cette carte comportant, d'une part, des informations mémorisées et, d'autre part, des informations imprimées.

La carte est hybride en ce sens qu'elle comporte un support 12 formé d'un ensemble de couches et deux puces 14, 16 chacune comportant un micro-circuit électronique de mémorisation et de traitement d'informations, l'un étant accessible par contact et l'autre étant accessible sans contact.

En variante, la carte est « duale » en ce sens qu'elle comporte une unique puce à laquelle il est possible d'accéder à la fois par contact et sans contact. Suivant encore une autre variante, la carte comporte une unique puce à laquelle il est possible d'accéder seulement sans contact.

Dans l'exemple décrit ici, l'une des puces 14 est une puce dite « à contact », c'est-à-dire qu'elle présente une face affleurante constituée d'un ensemble de contacts adjacents propres à coopérer avec des contacts correspondants d'un lecteur de carte, afin d'assurer une connexion électrique et un transfert d'informations entre le lecteur de carte et le micro-circuit de la puce.

La seconde puce 16 est une puce dite « sans contact ». Elle comporte un micro-circuit, accessible depuis un lecteur de carte adapté au travers d'une antenne 18 d'émission et de réception d'informations intégrées dans la carte.

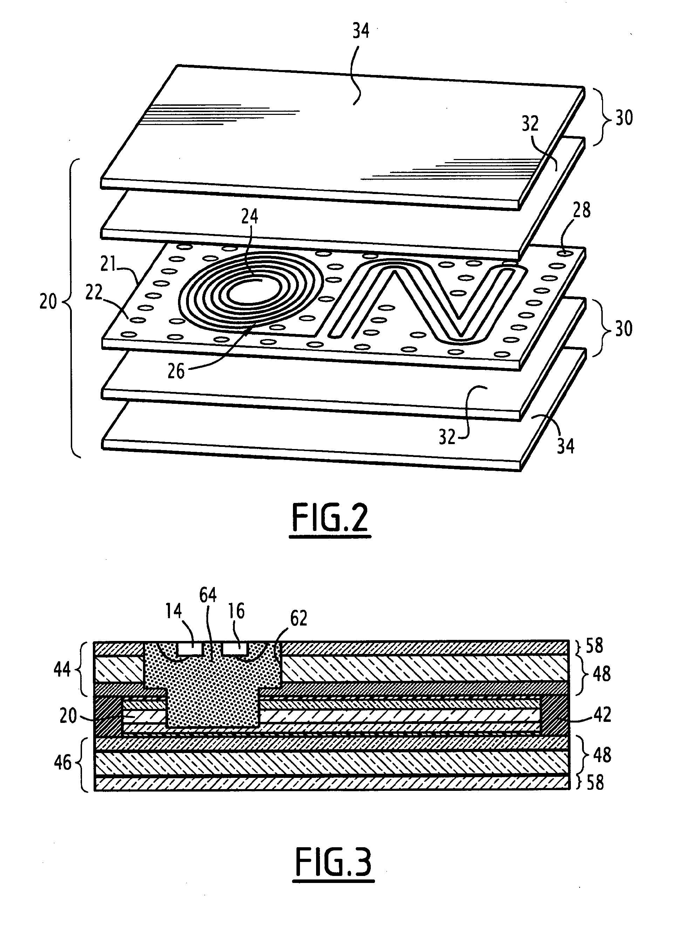

L'antenne 18 est formée dans un insert formant antenne 20 dont la structure de détail est illustrée sur la figure 2.

L'insert formant antenne comporte une couche centrale 21 constituée d'un substrat 22 en forme de feuille et d'au moins un conducteur 24 s'étendant le long au moins d'une face du substrat.

Avantageusement, le conducteur 24 est formé par gravure dans un dépôt d'aluminium réalisé sur au moins une face du substrat 22.

De préférence, un conducteur 24 est prévu sur chaque face du substrat 22 afin d'accroître la longueur de l'antenne, les conducteurs des deux faces étant reliés entre eux.

Avantageusement, au moins l'un des conducteurs chemine suivant un motif reconnaissable, tel que par exemple une ou plusieurs lettres de l'alphabet. Dans l'exemple représenté, une partie de l'antenne forme la lettre N. L'autre partie de l'antenne 18 forme une boucle 26 propre à assurer un couplage électromagnétique avec la puce sans contact 16. Cette boucle 26 est formée au droit de la puce 16. Comme connu en soi, la puce 16 est équipée d'un bobinage complémentaire permettant un couplage électromagnétique entre la bobine 24 et la puce 26, par interaction électromagnétique entre les deux bobinages.

Le substrat 22 est formé par exemple d'un matériau transparent, tel que du polyéthylène téréphtalate couramment désigné par l'acronyme PET d'une épaisseur comprise entre 30 et 50 microns et de préférence sensiblement égale à 40 microns.

Le substrat 22 est traversé de part en part par des trous 28 réalisés sur l'essentiel de la surface du substrat en dehors des régions où s'étend le conducteur formant antenne. Ces trous 28 sont propres à permettre la liaison au travers du substrat de couches de couverture 30.

Chaque face du substrat 22 est recouverte d'une couche de couverture 30 formée chacune de deux feuilles superposées laminées de natures différentes.

Les deux couches de couverture 30 sont de préférence identiques.

Chaque couche 30 comporte une feuille proximale 32 disposée à proximité de la couche centrale 21 et une couche distale 34 disposée à distance de la couche centrale 21. De préférence, les feuilles proximales et distales sont les uniques constituants de la couche de couverture 30 et la feuille proximale 32 est appliquée directement sur la couche centrale 21.

La feuille proximale 32 a un module visco-élastique plus élevé que celui de la feuille distale 34, c'est-à-dire que lorsque celles-ci sont soumises dans des mêmes conditions à une même contrainte mécanique, à une même température, le matériau de la feuille distale 34 s'écoule plus que le matériau de la feuille proximale 32. La fluidité de la feuille distale 34 est alors supérieure à celle de la feuille proximale 32. Cette propriété est vraie notamment aux températures et dans les conditions de contraintes mécaniques présentes lors des phases de lamination de l'insert, c'est-à-dire à une température comprise entre 160°C et 200°C, de préférence entre 175°C et 185°C et sous une contrainte comprise entre 10N/cm² et 100N/cm², de préférence entre 85N/cm² et 95N/cm². Les deux feuilles sont formées par exemple dans le même matériau, tel que du polycarbonate, mais avec des caractéristiques différentes notamment en ce qui concerne leurs propriétés visco-élastiques et notamment leur capacité d'écoulement.

Ainsi, lors d'une soumission à une élévation de température et lors d'une application d'une même pression sur les deux feuilles, la feuille proximale s'écoule moins que la feuille distale, la viscosité de la feuille proximale étant alors plus grande que celle de la feuille distale.

Ainsi, par exemple, chaque feuille proximale 32 est formée d'une feuille de polycarbonate transparente d'épaisseur comprise entre 90 microns et 110 microns, de préférence 105 microns. Cette feuille est formée par exemple de Makrofol ID-6-2 transparent commercialisé par la société BAYER.

La feuille distale 34 est formée d'une feuille de polycarbonate blanche opaque ayant une épaisseur comprise entre 90 microns et 110 microns et de préférence 100 microns. Cette feuille est formée par exemple de Makrofol ID-4-4 blanc commercialisé par la société BAYER.

La différence d'écoulement est obtenue notamment par une intégration dans le polycarbonate d'une quantité différente de charges minérales et notamment de dioxyde de titane.

Ainsi, la feuille proximale 32 comporte une quantité de dioxyde de titane inférieure à la quantité de dioxyde de titane de la feuille distale 34.

Lors de l'écoulement de matière, la présence de cette charge minérale engendre une augmentation de la fluidité de la matière en raison d'une augmentation de l'énergie provoquée par les chocs entre particules formant la charge.

La couche centrale 31, les feuilles proximales 32 et les feuilles distales 34 sont liées entre elles par lamination simultanée.

Cette lamination s'effectue sous la forme d'une phase à chaud suivie d'une phase de refroidissement.

Lors de la phase à chaud, les trois épaisseurs sont maintenues à une température comprise entre 175°C et 185°C, de préférence sensiblement égale à 180°C. L'empilement ainsi formé est soumis pendant 13 minutes à une pression de 12N/cm² puis pendant 14 minutes à une pression de 90N/cm², celui-ci étant maintenu à la température proche de 180°C.

Lors de la phase de refroidissement, l'empilement est maintenu à une pression de 90N/cm² jusqu'à ce que sa température soit proche de 35°C, température à laquelle l'insert est manipulable.

Lors de cette lamination, les feuilles proximales 32 coulent au travers des trous 28 est se lient l'une à l'autre par des pontets de matière formés au travers des trous, assurant ainsi une cohésion de l'ensemble, même si l'adhérence entre le substrat 22 de PET et les feuilles proximales 32 de polycarbonate est faible.

La fluidité de la matière constituant la feuille proximale 32 étant plus faible que celle de la matière constituant la feuille distale 34, la matière de la feuille 32 remplit difficilement les trous de la couche centrale et se déforme donc peu, permettant d'obtenir après lamination un insert ayant une très bonne planéité de surface.

Après lamination, l'insert a une épaisseur sensiblement égale à 440 microns.

Comme illustré aux figures 1 et 3, l'insert formant antenne est reçu dans un cadre de compensation d'épaisseur 42, formant entretoise et est enserré entre deux couches de structure identique 44, 46 présentant extérieurement un contour identique au contour extérieur du cadre 42 et de surface supérieure à celle de l'insert formant antenne 20.

L'épaisseur de cadre 42 est légèrement inférieure à celle de l'insert 20, son épaisseur étant par exemple de 410 microns.

Chaque couche de structure 44, 46 comprend une feuille 48 thermo-inscriptible par laser. Cette feuille 48 est de préférence d'une épaisseur de 150 microns.

La feuille 48 porte sur sa face exposée des éléments décoratifs ou informatifs obtenus par impression offset et sérigraphie. De préférence, la feuille 48 est thermo-inscriptible par laser.

Dans chaque couche de structure 44, 46, la feuille 48 est dotée de moyens de sécurité de type « image optiquement variable », image obtenue par gravure laser avec effet d'inclinaison qu'on incorpore dans les cartes en plastique : les images sont gravées à des angles différents au moyen d'un ensemble de lentilles cylindriques gaufrées à la surface de la carte. L'image que l'on peut voir varie ainsi en fonction de l'angle d'observation.

Chaque feuille 48 est recouverte d'une feuille de protection 58 formée de polycarbonate transparent. Cette feuille est formée par exemple de Makrofol ID chemflex d'une épaisseur de 55 microns commercialisé par la société BAYER.

En variante, cette couche de protection est formée d'une couche thermo-inscriptible par laser telle par exemple qu'une couche de Makrofold ID6-2 750059 de 75 microns d'épaisseur commercialisé par la société BAYER.

Les puces 14 et 16 sont logées dans un évidement 62 ménagé dans l'épaisseur de l'une des couches de structure 44, 46 et partiellement dans l'insert 20. Cet évidement est réalisé par usinage et les puces 14, 16 sont noyées dans une résine 64, la puce 14 affleurant la surface extérieure de la carte et la puce 16 étant disposée en regard de la bobine 26.

Pour la fabrication de l'insert, le substrat 22 est d'abord pourvu des conducteurs 24 et les trous traversants 28 sont ménagés dans l'épaisseur du substrat. Plusieurs antennes, par exemple au nombre de quarante-huit, sont réalisées sur un même substrat sous forme de matrice avec un intervalle entre les antennes suffisant pour former plusieurs inserts dans un même substrat. Les feuilles proximale et distale 32, 34 initialement séparées sont rapportées l'une sur l'autre contre la couche centrale et des soudures par points sont réalisées, à l'extérieur de l'encombrement des inserts finaux, entre les trois couches ainsi appliquées.

Des feuilles proximale et distale sont ensuite rapportées sur l'autre face de la couche centrale et des soudures par points sont également réalisées entre les trois. L'ensemble ainsi formé est placé dans une presse de laminage puis est de préférence chauffé à 180°C et laminé sous une pression de 12N/cm² pendant 13 minutes puis 90N/cm² pendant 14 minutes pour assurer une cohésion de la couche centrale et des feuilles proximales et distales, par fusion du matériau des couches proximales au travers des trous 28 et cohésion des deux couches de polycarbonate disposées de part et d'autre. L'ensemble ainsi formé est ensuite refroidi comme exposé précédemment.

La plaque ainsi formée est ensuite découpée pour former un nombre d'inserts égal au nombre d'antennes présentes sur la couche centrale.

Pour la fabrication d'une carte, le cadre 42 de préférence transparent est prédécoupé suivant son contour intérieur et un insert formant antenne 20 est inséré dans celui-ci. Les feuilles constituant les couches de structure 44, 46 sont ensuite rapportées par lamination.

Enfin, un usinage est réalisé pour former la cavité puis le module comportant les puces 14, 16 est mis en place et immobilisé dans la cavité.

On constate qu'un insert formant antenne ainsi constitué présente une planéité très satisfaisante et qu'en particulier les liaisons entre les couches de polycarbonate formées au travers des trous 28 ne sont pas perceptibles depuis la surface extérieure de l'insert formant carte.

Ainsi, la carte à puce finale présente un état de planéité satisfaisant. La planéité de la carte est assurée notamment du fait de l'existence, de part et d'autre de l'insert formant carte, de couches de structure 44, 46 identiques et de même épaisseur. Ces caractéristiques physiques garantissent le respect des normes par la carte, notamment la norme ISO, tout en permettant la possibilité de placer sur son recto et/ou sur son verso des motifs de sécurité.

## Revendications

1. Insert formant antenne (20) pour une carte à puce comportant :
- une couche centrale (21) formant antenne comportant un substrat (22) et au moins un conducteur (24) s'étendant suivant au moins une face du substrat (22) ;
- au moins une couche de couverture (30) recouvrant d'au moins un côté la couche centrale (21) et propre à compenser les irrégularités de la surface de la couche centrale (21),
**caractérisé en ce que** la ou chaque couche de couverture (30) comporte une feuille proximale (32) située à proximité de la couche centrale (21) et une feuille distale (34) située à l'écart de la couche centrale (21), les deux feuilles étant superposées et laminées et la feuille proximale (32) a, lors de la phase de lamination, une fluidité plus faible que celle de la feuille distale (34).

2. Insert formant antenne selon la revendication 1, **caractérisé en ce que** la couche centrale (21), la feuille proximale (32) et la feuille distale (34) sont liées entre elles par lamination simultanée.

3. Insert formant antenne selon la revendication 1 ou 2, **caractérisé en ce que** la couche centrale (21) est dépourvue de micro-circuit électronique et ne comporte qu'un ou plusieurs conducteurs formant antenne.

4. Insert formant antenne selon l'une quelconque des revendications précédentes, **caractérisé en ce que** le substrat (22) est traversé de part en part de trous débouchant (28) au travers lesquels les feuilles proximales (32) sont reliées.

5. Insert formant antenne selon l'une quelconque des revendications précédentes, **caractérisé en ce que** le ou chaque conducteur (18) forme un motif identifiable.

6. Insert selon l'une quelconque des revendications précédentes, **caractérisé en ce que** la feuille proximale (32) et la feuille distale (34) sont en polycarbonate.

7. Insert selon l'une quelconque des revendications précédentes, **caractérisé en ce que** la feuille proximale (32) a une fluidité plus faible que celle de la feuille distale (34) à une température comprise entre 160°C et 200°C et sous une contrainte comprise entre 10N/cm² et 100N/cm².

8. Insert selon la revendication 7, **caractérisé en ce que** la feuille proximale (32) a une fluidité plus faible que celle de la feuille distale (34) à une température comprise entre 175°C et 185°C et sous une contrainte comprise entre 85N/cm² et 95N/cm².

9. Carte à puce **caractérisée en ce qu'**elle comporte, dans sa partie médiane, un insert formant antenne selon l'une quelconque des revendications précédentes, et, de part et d'autre, deux couches de structure (44, 46), au moins l'une des couches comportant une puce (14, 16).

10. Carte à puce selon la revendication 9, **caractérisée en ce que** les deux couches de structure (44, 46) sont identiques et de même épaisseur.

11. Carte à puce selon la revendication 9 ou 10, **caractérisée en ce qu'**elle comporte une entretoise (42) au coté de l'insert formant antenne (20), l'insert formant antenne (20) et l'entretoise (42) étant enserrés entre les deux couches de structure (44, 46).

12. Carte à puce selon l'une quelconque des revendications 9 à 11, **caractérisée en ce que** la ou chaque couche de structure (30) comporte une couche thermo-inscriptible par laser.

13. Procédé de fabrication d'un insert formant antenne selon l'une quelconque des revendications 1 à 8, **caractérisé en ce qu'**il comporte les étapes suivantes :
- former une couche centrale (21) formant antenne à partir d'un substrat (22) et d'au moins un conducteur (24) s'étendant suivant au moins une face du substrat (22) ;
- appliquer une feuille proximale (32) et une feuille distale (34) superposées mais dissociées, au moins d'un côté de la couche centrale (21), la feuille proximale (32) étant située à proximité de la couche centrale (21) et la feuille distale (34) étant située à distance de la couche centrale (21), la feuille proximale (32) ayant, lors de la phase de lamination ultérieure, une fluidité plus faible que celle de la couche distale (34),
- laminer ensemble la couche centrale (21), la ou chaque feuille proximale (32) et la ou chaque feuille distale (34).

## Patentansprüche

1. Antenneneinsatz (20) für eine Chipkarte, umfassend:
- eine Antennenmittelschicht (21), die ein Substrat (22) und mindestens einen sich entlang mindestens einer Oberfläche des Substrats (22) erstreckenden Leiter (24) aufweist;
- mindestens eine Deckschicht (30), welche die Mittelschicht (21) auf mindestens einer Seite bedeckt und dazu geeignet ist, Unregelmäßigkeiten der Oberfläche der Mittelschicht (21) auszugleichen, **dadurch gekennzeichnet,**
**dass** die oder jede Deckschicht (30) eine nahe der Mittelschicht (21) angeordnete proximale Folie (32) und eine entfernt von der Mittelschicht (21) angeordnete distale Folie (34) aufweist, wobei die beiden Folien einander überlagern und laminiert sind und die proximale Folie (32) während der Phase der Laminierung eine geringere Fließfähigkeit aufweist als die distale Folie (34).

2. Antenneneinsatz nach Anspruch 1,
**dadurch gekennzeichnet,**
**dass** die Mittelschicht (21), die proximale Folie (32) und die distale Folie (34) durch gleichzeitige Laminierung miteinander verbunden sind.

3. Antenneneinsatz nach Anspruch 1 oder 2,
**dadurch gekennzeichnet,**
**dass** die Mittelschicht (21) ohne elektronische Mikroschaltkreise ausgebildet ist und lediglich einen oder mehrere Antennenleiter aufweist.

4. Antenneneinsatz nach einem der vorhergehenden Ansprüche,
**dadurch gekennzeichnet,**
**dass** das Substrat (22) von Durchgangslöchern (28) durchsetzt ist, durch welche die proximalen Folien (32) verbunden sind.

5. Antenneneinsatz nach einem der vorhergehenden Ansprüche,
**dadurch gekennzeichnet,**
**dass** der oder jeder Leiter (18) ein erkennbares Muster ausbildet.

6. Einsatz nach einem der vorhergehenden Ansprüche,
**dadurch gekennzeichnet,**
**dass** die proximale Folie (32) und die distale Folie (34) aus Polycarbonat bestehen.

7. Einsatz nach einem der vorhergehenden Ansprüche,
**dadurch gekennzeichnet,**
**dass** die proximale Folie (32) bei einer Temperatur zwischen 160 °C und 200 °C und unter einem Druck von 10 N/cm² bis 100 N/cm² eine geringere Fließfähigkeit aufweist als die distale Folie (34).

8. Einsatz nach Anspruch 7,
**dadurch gekennzeichnet,**
**dass** die proximale Folie (32) bei einer Temperatur zwischen 175 °C und 185 °C und unter einem Druck von 85 N/cm² bis 95 N/cm² eine geringere Fließfähigkeit aufweist als die distale Folie (34).

9. Chipkarte,
**dadurch gekennzeichnet,**
**dass** sie in ihrem mittleren Abschnitt einen Antenneneinsatz nach einem der vorhergehenden Ansprüche und auf beiden Seiten jeweils eine Strukturschicht (44, 46) aufweist, wobei mindestens eine der Schichten einen Chip (14, 16) umfasst.

10. Chipkarte nach Anspruch 9,
**dadurch gekennzeichnet,**
**dass** die beiden Strukturschichten (44, 46) identisch sind und die gleiche Dicke aufweisen.

11. Chipkarte nach einem der Ansprüche 9 oder 10,
**dadurch gekennzeichnet,**
**dass** sie neben dem Antenneneinsatz (20) einen Abstandshalter (42) aufweist, wobei der Antenneneinsatz (20) und der Abstandshalter (42) zwischen den beiden Strukturschichten (44, 46) eingespannt sind.

12. Chipkarte nach einem der Ansprüche 9 bis 11,
**dadurch gekennzeichnet,**
**dass** die oder jede Strukturschicht (30) eine mittels Laser thermisch beschreibbare Schicht aufweist.

13. Verfahren zur Herstellung eines Antenneneinsatzes nach einem der Ansprüche 1 bis 8,
**dadurch gekennzeichnet,**
**dass** das Verfahren die folgenden Schritte umfasst:
- Bilden einer Antennenmittelschicht (21) aus einem Substrat (22) und mindestens einem sich entlang mindestens einer Oberfläche des Substrats (22) erstreckenden Leiter (24);
- Aufbringen einer proximalen Folie (32) und einer distalen Folie (34), die einander überlagern aber nicht miteinander verbunden sind, auf mindestens einer Seite der Mittelschicht (21), wobei die proximale Folie (32) nahe der Mittelschicht (21) angeordnet ist und die distale Folie (34) entfernt von der Mittelschicht (21) angeordnet ist, und wobei die proximale Folie (32) während der nachträglichen Laminierungsphase eine geringere Fließfähigkeit aufweist als die distale Schicht (34); und
- Zusammenlaminieren der Mittelschicht (21), der oder jeder proximalen Folie (32) und der oder jeder distalen Folie (34).

## Claims

1. An antenna-forming insert (20) for a chip card including:
- a central layer (21) forming an antenna including a substrate (22) and at least one conductor (24) extending along at least one face of the substrate (22);
- at least one cover layer (30) covering on at least one side the central layer (21) and capable of compensating for the irregularities of the surface of the central layer (21); **characterized in that** said or each cover layer (30) includes a proximal sheet (32) located in proximity to the central layer (21) and a distal sheet (34) located away from the central layer (21), both sheets being superposed and laminated and the proximal sheet (32) during the lamination phase has lower fluidity than that of the distal sheet (34).

2. The antenna-forming insert according to claim 1, **characterized in that** the central layer (21), the proximal sheet (32) and the distal sheet (34) are connected together by simultaneous lamination.

3. The antenna-forming insert according to claim 1 or 2, **characterized in that** the central layer (21) is without any electronic microcircuit and only includes one or several conductors forming an antenna.

4. The antenna-forming insert according to any of the preceding claims, **characterized in that** the substrate (22) is crossed right through by opening holes (28) through which the proximal sheets (32) are connected.

5. The antenna-forming insert according to any of the preceding claims, **characterized in that** said or each conductor (18) forms an identifiable pattern.

6. The insert according to any of the preceding claims, **characterized in that** the proximal sheet (32) and the distal sheet (34) are in polycarbonate.

7. The insert according to any of the preceding claims **characterized in that** the proximal sheet (32) has lower fluidity than that of the distal sheet (34) at a temperature comprised between 160°C and 200°C and under a stress comprised between 10 N/cm² and 100 N/cm².

8. The insert according to claim 7, **characterized in that** the proximal sheet (32) has lower fluidity than that of the distal sheet (34) at a temperature comprised between 175°C and 185°C and under a stress comprised between 85 N/cm² and 95 N/cm².

9. A chip card **characterized in that** it includes, in its middle portion, an antenna-forming insert according to any of the preceding claims and on either side two structure layers (44, 46), at least one of the layers including a chip (14, 16).

10. The chip card according to claim 9 **characterized in that** both structure layers (44, 46) are identical and of the same thickness.

11. The chip card according to claim 9 or 10, **characterized in that** it includes a spacer (42) on the side of the antenna-forming insert (20), the antenna-forming insert (20) and the spacer (42) being hemmed in between both structure layers (44, 46).

12. The chip card according to any of claims 9 to 11, **characterized in that** said or each structure layer (30) includes a layer thermally writable with a laser.

13. A method for manufacturing an antenna-forming insert according to any of claims 1 to 8, **characterized in that** it includes the following steps:
- forming a central antenna-forming layer (21) from a substrate (22) and from at least one conductor (24) extending along at least one face of the substrate (22);
- applying a proximal sheet (32) and a distal sheet (34) superposed but dissociated, at least on one side of the central layer (21), the proximal sheet (32) being located in proximity to the central layer (21) and the distal sheet (34) being located at a distance from the central layer (21), the proximal sheet (32) during the subsequent lamination phase having lower fluidity than that of the distal layer (34);
- laminating together the central layer (21), said or each proximal sheet (32) and said or each distal sheet (34).
